# EUROPEAN PATENT SPECIFICATION

(11) **EP 1 531 108 B1**
(45) Date of publication and mention of the grant of the patent: **23.01.2008**
(21) Application number: 04256682.8
(22) Date of filing: 28.10.2004
(51) Int. Cl.: B60T 8/36, F15B 13/00

(54) **Electronically controlled brake system**
Elektronisch gesteuerte Bremsanlage
Système de freinage à commande électronique

(30) Priority: 12.11.2003 KR 2003079938
(43) Date of publication of application: 18.05.2005
(73) Proprietor: Mando Corporation, Pyungtaek-City, Kyungki-Do (KR)
(72) Inventor: Lee, Sang-Cheol, Namyangju-City, Kyungki-Do (KR)
(74) Representative: Pratt, David Martin

(56) References cited:
- EP-A- 1 288 092
- WO-A-95/20510
- WO-A-96/13415
- WO-A-02/055355
- US-A- 5 462 344
- US-A- 5 662 392
- PATENT ABSTRACTS OF JAPAN vol. 1998, no. 08, 30 June 1998 (1998-06-30) & JP 10 059151 A (NISSHINBO IND INC), 3 March 1998 (1998-03-03)

## Description

The present invention relates to a solenoid valve for an electronically controlled brake system, and more particularly to a device for fixing coil assemblies of solenoid valves to a housing of an electric control unit (ECU) in an electronically controlled brake system.

Generally, electronically-controlled brake systems are used for efficiently preventing generation of a slippage phenomenon in a vehicle, and thus to obtain a strong and stable brake force. For such electronically-controlled brake systems, there are an anti-lock brake system (ABS) adapted to prevent slippage of wheels during a braking operation, a brake traction control system (BTCS) adapted to prevent slippage of drive wheels during quick start or sudden acceleration, and a vehicle dynamic control system (VDCS), which is a combination of the ABS and BTCS for stably maintaining the running state of a vehicle by controlling the pressure of brake oil.

Such an electronically-controlled brake system includes a plurality of solenoid valves to control the pressure of brake oil transmitted to wheel brakes of a vehicle, a low-pressure accumulator for temporarily storing the brake oil, a pump for forcibly pumping the brake oil temporarily stored in the low-pressure accumulator, a high-pressure accumulator for reducing pressure pulsation of the brake oil pumped by the pump, and an electric control unit (ECU) for electrically controlling the solenoid valves and pump.

Respective valve assemblies of the solenoid valves, accumulators, and pump are received in a compact state in a hydraulic block made of an aluminum material. The ECU is coupled with the hydraulic block by means of bolts. The ECU includes a housing, in which respective coil assemblies of the solenoid valves and a circuit board are received. Hereinafter, these structures will be described in detail.

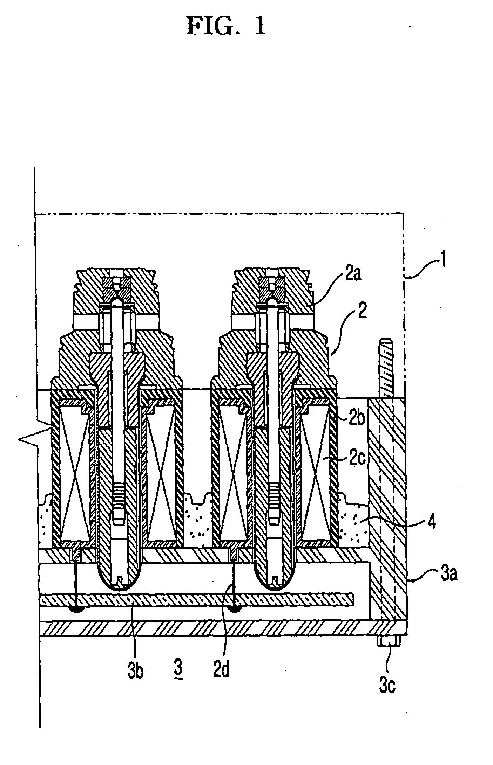

FIG. 1 shows a conventional electronically-controlled brake system which includes a hydraulic block 1, in which respective valve assemblies 2a of solenoid valves 2 are fitted in a compact state.

The electronically controlled brake system also includes a housing 3a injection-moulded to have a rectangular box structure having a bottom wall and side walls, while being open at the top thereof. The housing 3a is coupled to the hydraulic block 1 by means of bolts 3c, and a circuit board 3b is mounted in a space defined in a lower portion of the housing 3a. Respective coil assemblies 2b of the solenoid valves 2 are mounted in the housing 3a.

Each coil assembly 2b has a cylindrical body open at the top and bottom thereof, and a coil 2c wound around the cylindrical body. Leads 2d extend from the coil 2c to connect the coil 2c to the circuit board 3b. When the ECU housing 3a is coupled to the hydraulic block 1, a sleeve-shaped lower portion of each valve assembly 2a is loosely received in a central portion of the associated coil assembly 2b. Accordingly, when current is applied to each coil assembly 2b, an electric field is generated around the coil assembly 2b, so that the valve assembly 2a of the associated solenoid valve 2 is operated to open or close the solenoid valve 2.

Each coil assembly 2b is fixed, at a lower end thereof, to the bottom of the ECU housing 3a by a fixing member 4 over-moulded on the bottom of the ECU housing 3a around the lower end of the coil assembly 2b. That is, the coil assembly 2b is fixed to the bottom of the ECU housing 3a by a "moulding" made of rubber. In this state, each of the valve assemblies 2a mounted to the hydraulic block 1 is coupled with the associated coil assembly 2b.

In the conventional electronically controlled brake system, however, there is a problem in that a great deal of time is required for the process of fixing the coil assemblies 2b of the solenoid valves 2, because the fixing of the coil assemblies 2b is achieved through a moulding process using rubber. The fixing of each coil assembly 2b is achieved by positioning the coil assembly 2b at a desired position on the bottom of the ECU housing 3a, which is injection-moulded using a plastics material, and then over-moulding rubber on the bottom of the ECU housing 3a around the coil assembly 2b.

Since the fixing of each coil assembly 2b is achieved by moulding rubber on the ECU housing 3a, as mentioned above, the coil assembly fixing process is difficult and requires a great deal of time. As a result, an increase in the manufacturing costs occurs.

Known electonically-controlled brake systems are described in US-A-5 662 392 and EP-A-1288092.

An aim of the invention is to provide a solenoid valve for an electronically-controlled brake system which has an improved fixing structure for a coil assembly included in the solenoid valve for easily achieving the fixing of the coil assembly, and thus to reduce the manufacturing costs of the electronically-controlled brake system.

In accordance with one aspect, the present invention provides an electronically-controlled brake system comprising an electric control unit (ECU) housing, and a plurality of solenoid valves each comprising a valve assembly including a sleeve and an armature slidably received in the sleeve, a coil assembly including a bobbin for axially receiving the sleeve of the valve assembly and a coil wound around the bobbin, a case for receiving the bobbin, the case being axially spaced from the top of the bobbin to define a predetermined gap, leads fixed to the bobbin in an inserted manner for electrical connection to a circuit board arranged in the ECU housing, and a fixing device for fixing the coil assembly to the ECU housing, the coil assemblies of the solenoid valves being arranged in the ECU housing while being uniformly spaced apart from one another, the fixing device comprising: fixing bosses axially protruding from the bottom of the bobbin to extend axially through the case; fixing grooves formed at the bottom wall of the ECU housing for receiving the protruding ends of the fixing bosses; and an elastic support member provided at the bottom wall of the ECU housing for elastically supporting the bottom of the case.

The elastic support member is fixed to the bottom wall of the ECU housing at one end, and may be free at the other end.

The elastic support member is provided with a protrusion protruding from an upper surface of the free end of the elastic member to support the case.

The free end of the elastic support member and the protrusion may be of arcuate shape to support the bottom of the case in an elastic and stable manner.

The elastic support member may have a structure having a width which gradually reduces towards its free end so that the elastic support member does not interfere with the fixing grooves.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the drawings, in which:
FIG. 1 is a sectional view illustrating a solenoid valve mounting structure of a conventional electronically controlled brake system;
FIG. 2 is a perspective view illustrating the internal structure of an ECU housing in an electronically controlled brake system according to the present invention;
FIG. 3 is an exploded perspective view illustrating a part of a solenoid valve structure of the system of FIG 2;
FIG. 4 is a sectional view illustrating a device for fixing a coil assembly of the solenoid valves of FIG. 3; and
FIG. 5 is a sectional view illustrating the device of FIG. 4, taken in a direction different from that of FIG. 4.

Reference will now be made in detail to the embodiments of the present invention, examples of which are illustrated in the drawings. The embodiments are described below to explain the present invention by referring to the figures.

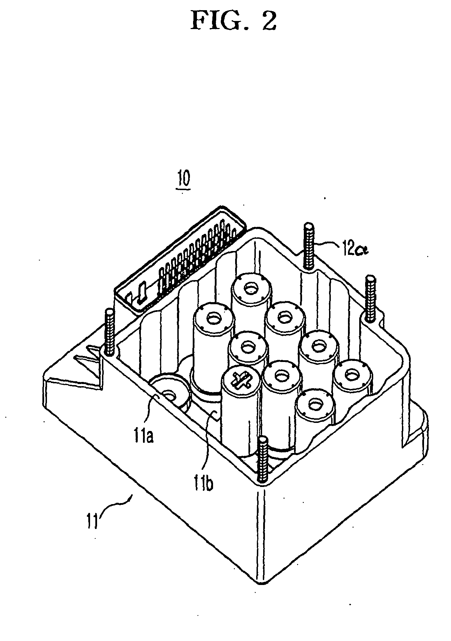

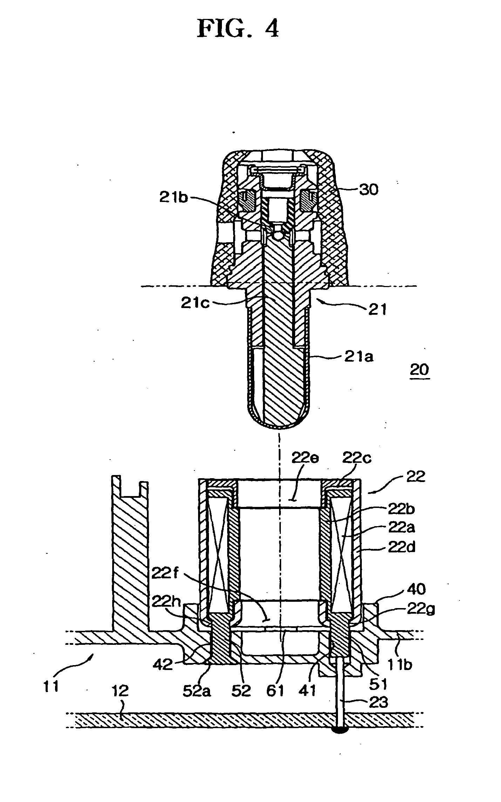

Referring to the drawings, FIG. 2 shows an ECU 10, which is included in an electronically controlled brake system according to the present invention. As shown in FIG. 2, the ECU 10 includes an ECU housing 11 having side walls 11a and a bottom wall 11 b, while being open at the top thereof. A circuit board 12 (see FIG. 4) is mounted to an outer surface of the bottom wall 11 b of the ECU housing 11. With this configuration, the ECU 10 controls the overall operation of the electronically-controlled brake system.

A hydraulic block 30, part of which is shown in FIG. 4, is coupled to the top of the ECU housing 11 by means of mounting bolts 12a. The hydraulic block 30 receives therein a plurality of normal open or normal closed solenoid valves 20 (see FIG. 4), a pair of pumps (not shown), and low-pressure and high-pressure accumulators (not shown) in a compact state.

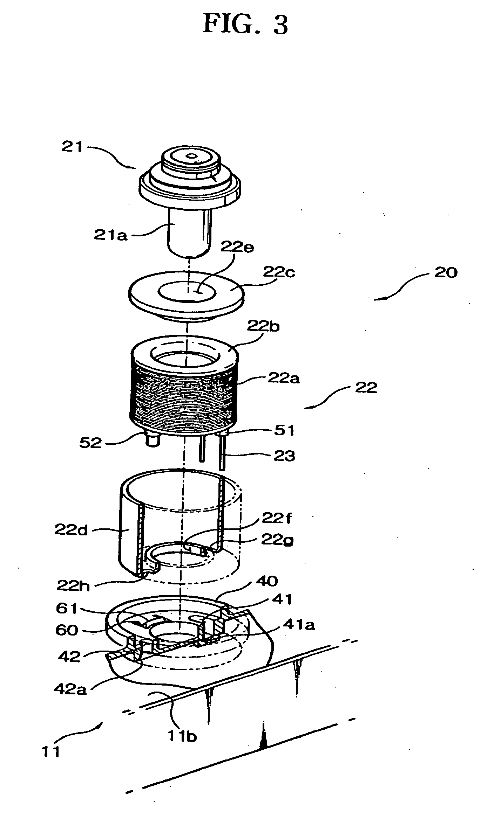

Referring to FIGS. 3 and 4, each solenoid valve 20 includes a valve assembly 21, and a coil assembly 22. For convenience of description, the following description will be given in conjunction with only one solenoid valve. The valve assembly 21 includes an orifice 21 b, a sleeve 21 a coupled to the coil assembly 22 such that the sleeve 21 a is loosely received in the coil assembly 22, and an armature 21c slidably received in the sleeve 21 a to open and close the orifice 21b. The coil assembly 22 generates an electromagnetic force when current is applied to the coil assembly 22, to actuate the armature 21 c.

The valve assembly 21 is tightly fitted in the hydraulic block 30. The coil assembly 22 is mounted on the bottom wall 11b of the ECU housing 11 such that the coil assembly 22 extends vertically. The valve assembly 21 is electrically connected to the circuit board 12 via leads 23, as will be described hereinafter.

The coil assembly 22 is firmly fixed to the hydraulic block 30 by a recess 40 formed at the bottom wall 11b of the ECU housing 11 to receive the coil assembly 22, and a fixing device to fix the coil assembly 22 received in the recess 40. This configuration will be described in detail hereinafter.

The coil assembly 22 includes a cylindrical bobbin 22b, around which a coil 22a is wound several times. The leads 23 are also included in the coil assembly 22. The leads 23 are fixed to a lower end of the bobbin 22b in an inserted manner, and are connected with opposite ends of the coil 22a, respectively, to guide the supply of current to the coil 22a. The coil assembly 22 also includes an upper case 22c and a lower case 22d coupled to each other to enclose the bobbin 22b. The bobbin 22b is formed using a plastics material in accordance with an injection moulding process. In this process, the leads 23 are fixed to the lower end of the bobbin 22b in an inserted manner, such that the leads 23 extend downwardly from the bobbin 22b.

The lower case 22d has an upwardly-open cylindrical structure. The upper case 22c is coupled to an open upper end of the lower case 22d to cover the upper end of the lower case 22d so that the bobbin 22d is received in the lower case 22d. A predetermined gap is maintained between the bobbin 22b and the upper case 22c, in order to prevent the resistance of the coil 22a wound around the bobbin 22b from being varied due to the weight of the upper case 22c. Through holes 22e and 22f are formed at respective central portions of the bottoms of the upper and lower cases 22c and 22d, so that the sleeve 21 a of the valve assembly 21 extends through the upper and lower cases 22c and 22d. Holes 22g and 22h are formed through the bottom of the lower case 22d at opposite sides in a symmetrical manner, so that first and second fixing bosses 51 and 52 extend through the holes 22g and 22h in a loose manner, respectively.

The recess 40 is defined by an upwardly-open cylindrical structure formed on the bottom wall 11 b of the ECU housing 11. The lower end of the coil assembly 22 is fitted in the recess 40. Thus, the coil assembly 22 is temporarily assembled to the ECU housing 11.

As described above, the fixing device is adapted firmly to fix the coil assembly 22 in the recess 40. The first and second fixing bosses 51 and 52 are included in the fixing device. The first and second fixing bosses 51 and 52 are provided at the lower end of the bobbin 22b in a symmetrical manner. The fixing device also includes first and second fixing grooves 41 and 42 formed at an inner surface of the bottom of the recess 40 in the ECU housing 11 to engage with respective lower ends of the first and second fixing bosses 51 and 52, and an elastic support member 60 provided at the bottom of the recess 40 in the ECU housing 11 for elastically supporting the lower case 22d in the recess 40.

The first fixing boss 51 is formed on the lower end of the bobbin 22b at one side of the bobbin 22b in the form of an oval tubular member so that the leads 23 extend through the first fixing boss 51. The second fixing boss 52 is formed on the lower end of the bobbin 22b at the other side of the bobbin 22b in the form of a circular rod member such that the second fixing boss 52 opposes the first fixing boss 51. The first and second fixing bosses 51 and 52 are formed integrally with the bobbin 22b by an injection-moulding process, such that the first and second fixing bosses 51 and 52 extend in an axial direction of the bobbin 22b while being integral with the bobbin 22b. The leads 23 for connecting the coil 22a to the circuit board 12 are inserted into the first fixing boss 51. The second fixing boss 52 extends by a predetermined length, so that the second fixing boss 52 protrudes through and beyond the second fixing groove 42. The protruding end of the second fixing boss 52 is subsequently plastically deformed to prevent the coil assembly 22 from being separated from the ECU housing 11.

The first fixing groove 41 is formed at the inner surface of the bottom of the recess 40, such that the first fixing groove 41 complements the first fixing boss 51. Lead holes 41 a are formed through the bottom of the first fixing groove 41, so that the leads 23 extend through the lead holes 41 a, respectively. The second fixing groove 42 is formed at the inner surface of the bottom of the recess 40 such that the second fixing groove 42 complements the second fixing boss 52. A taper hole 42a is formed through the bottom of the second fixing groove 42. The taper hole 42a has a diameter which gradually increases as the taper hole 42 extends downwardly. By virtue of such a structure of the taper hole 42a, a separation-preventing step 52a having a dish shape can be formed when the protruded end of the second fixing boss 52 is plastically deformed.

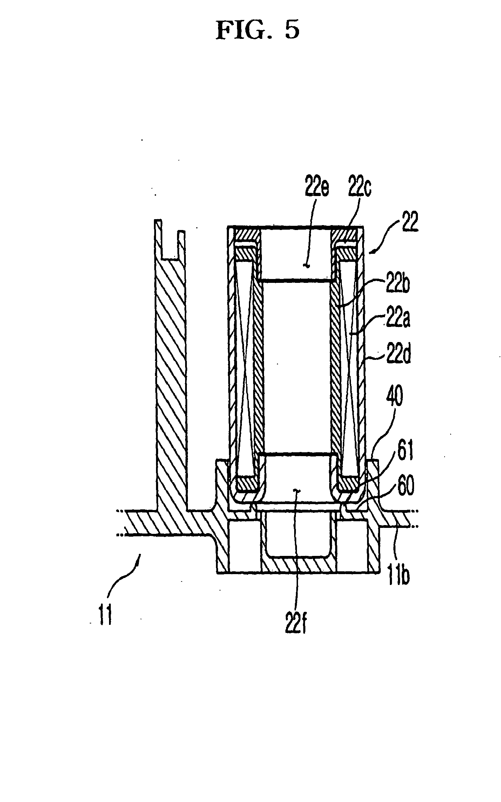

As shown in FIGS. 3 and 5, the elastic support member 60 has a rectangular plate shape. The elastic support member 60 is arranged at the bottom of the recess 40 inside the recess 40 for elastically supporting the bottom of the lower case 22d.

The elastic support member 60 is formed by cutting a bottom portion of the recess 40, such that the elastic support member 60 is fixed at one end thereof while being free at the other end. A protrusion 61 is provided at an upper surface of the free end of the elastic support member 60. The protrusion 61 comes into direct contact with the bottom of the lower case 22d when the lower case 22d is fitted in the recess 40. The free end of the elastic support member 60 and the protrusion 61 have arcuate shapes, respectively. In accordance with these structures, the bottom of the lower case 22d is supported in an elastic and stable manner.

Alternatively, the elastic support member 60 may have a triangular structure having a width which gradually reduces as it extends towards the free end thereof, in order to prevent the elastic support member 60 from interfering with the first and second fixing holes 41 and 42.

Now, the process for assembling the solenoid valve 20 having the above-described configuration according to the present invention will be described.

First, the bobbin 22b, around which the coil 22a is wound, is inserted into the lower case 22d such that the first and second fixing bosses 51 and 52 extend through and beyond the holes 22g and 22h, respectively. Thereafter, the upper case 22c is coupled to the upper end of the lower case 22d to cover the top of the lower case 22d. Thus, the coil assembly 22 is completely assembled.

Subsequently, the coil assembly 22 is seated in the recess 40, using an auxiliary tool, for example, a jig, such that the first and second fixing bosses 51 and 52 are inserted into the first and second fixing grooves 41 and 42, respectively.

With the coil assembly 22 seated in the recess 40, the leads 23 are inserted in the first fixing boss 51 to extend into a space defined in the lower portion of the ECU housing 11 through the lead holes 41 a of the first fixing groove 41. The leads 23 are then connected to the circuit board 12. The second fixing boss 52 also extends through the taper hole 42a of the second fixing groove 42 into the space defined in the lower portion of the ECU housing 11.

The protrusion 61 of the elastic support member 60 is also depressed by the coil assembly 22, so that the elastic support member 60 is elastically deformed to be downwardly inclined.

When heat is applied to the protruding end of the second fixing boss 52 in the above-described state, using an ultrasonic welding device or the like, the protruding end of the second fixing boss 52 is plastically deformed firmly to fix the second fixing boss 52 to the bottom wall 11b of the ECU housing 11.

Since the lower end of the first fixing boss 51 is pushed upwardly by the welding device during the above-described welding process, the bobbin 22b is moved upwardly by a certain distance. As a result, the upper end of the bobbin 22b comes into close contact with the upper case 22c.

When the jig, which continuously pushes the bottom wall 11 b of the ECU housing 11, is subsequently released, the elastic support member 60 returns to its original state, thereby moving the cases 22c and 22d upwardly by a certain distance.

As a result, a gap is formed between the top of the bobbin 22b and the upper case 22c. The cases 22c and 22d are restrained from moving vertically. Accordingly, it is possible to prevent the resistance of the coil 22a in the bobbin 22b from being varied due to the weight of the upper case 22c. Since upward movement of the cases 22c and 22d is restrained, the magnetic flux passing through the cases 22c and 22d is constant.

Thereafter, the hydraulic block 30 is positioned on the top of the ECU housing 11 in a vertically aligned state such that the sleeve 21 a of the valve assembly 21 is inserted into the coil assembly 22. The hydraulic block 30 is then fastened to the ECU housing 11, using the mounting bolts 12a, so that the hydraulic block 30 and ECU housing 11 are firmly coupled.

As will be apparent from the above description, in accordance with the fixing device for the coil assembly of the solenoid valve for the electronically controlled brake system according to the present invention, the bobbin are firmly coupled to the ECU housing by the fixing bosses provided at the bottom of the bobbin and the fixing grooves formed at the bottom of the ECU housing to receive the fixing bosses, and the cases enclosing the bobbin are elastically supported by the elastic support member. Accordingly, the bobbin and cases can be easily and firmly fixed to the ECU housing.

Therefore, the assembly process of the coil assembly is improved. Also, there is an advantage in that the manufacturing costs of the electronically-controlled brake system are reduced.

In accordance with the present invention, it is also possible to restrain vertical movement of the cases while maintaining a gap between the bobbin and the upper case. Accordingly, the magnetic flux passing through the cases is constant. Also, it is possible to prevent the resistance of the coil wound around the bobbin from being varied due to the weight of the upper case.

Therefore, there is no deviation in the performance of the solenoid valve, so that it is possible to precisely control the solenoid valve.

Although a few embodiments of the present general inventive concept have been shown and described, it will be appreciated by those skilled in the art that changes may be made in these embodiments without departing from the principles of the invention, the scope of which is defined in the appended claims.

## Claims

1. An electronically-controlled brake system comprising an electric control unit (ECU) housing (11), and a plurality of solenoid valves (20) each comprising a valve assembly (21) including a sleeve (21 a) and an armature (21 c) slidably received in the sleeve, a coil assembly (22) including a bobbin (22b) for axially receiving the sleeve of the valve assembly and a coil (22a) wound around the bobbin, a case (22c, 22d) for receiving the bobbin, the case being axially spaced from the top of the bobbin to define a predetermined gap, leads (23) fixed to the bobbin in an inserted manner for electrical connection to a circuit board (12) arranged in the ECU housing, and a fixing device for fixing the coil assembly to the ECU housing, the coil assemblies of the solenoid valves being arranged in the ECU housing while being uniformly spaced apart from one another, the fixing device comprising:
fixing bosses (51, 52) axially protruding from the bottom of the bobbin to extend axially through the case;
fixing grooves (41, 42) formed at the bottom wall of the ECU housing for receiving and fixing the protruding ends of the fixing bosses; and
an elastic support member (60) provided at the bottom wall of the ECU housing for elastically supporting the bottom of the case; **characterised in that**
the elastic support member is fixed to the bottom wall of the ECU housing at one end, and is free at the other end; and **in that** the elastic support member is provided with a protrusion (61) protruding from an upper surface of the free end of the elastic member to support the case.

2. A system according to claim 1, wherein the free end of the elastic support member (60) and the protrusion (61) are of arcuate shape thereby to support the bottom of the case in an elastic and stable manner.

3. A system according to claim 1 or claim 2, wherein the elastic support member (60) has a structure having a width which gradually reduces towards its free end so that the elastic support member does not interfere with the fixing grooves (41, 42).

## Patentansprüche

1. Elektronisch gesteuerte Bremsanlage, umfassend ein ECU-Gehäuse (Electronic Control Unit - Elektronische Steuereinheit) (11) und eine Vielzahl von Magnetventilen (20), von denen jedes eine Ventilanordnung (21) mit einer Hülse (21 a) und einem Anker (21 c), der gleitend in der Hülse aufgenommen wird, umfasst, eine Spulenanordnung (22) mit einem Spulenkörper (22b) zur axialen Aufnahme der Hülse der Ventilanordnung und einer um den Spulenkörper gewickelten Spule (22a), eine Verkleidung (22c, 22d) zur Aufnahme des Spulenkörpers, wobei die Verkleidung axial vom dem oberen Ende des Spulenkörpers beabstandet ist, um einen vorgegebenen Zwischenraum zu definieren, Zuleitungen (23), die in dem Spulenkörper eingeführt befestigt sind für eine elektrische Verbindung mit einer im ECU-Gehäuse angeordneten Leiterplatte (12) und eine Befestigungsvorrichtung zum Befestigen der Spulenanordnung an dem ECU-Gehäuse, wobei die Spulenanordnungen der Magnetventile in gleichmäßigem Abstand voneinander in dem ECU-Gehäuse angeordnet sind, wobei die Befestigungsvorrichtung umfasst:
Befestigungsvorsprünge (51, 52), die axial vom Boden des Spulenkörper hervorstehen und sich axial durch die Verkleidung erstrecken;
an der Bodenwand des ECU-Gehäuses gebildete Befestigungsnuten (41, 42) zur Aufnahme und Befestigung der hervorstehenden Enden der Befestigungsvorsprünge; und
ein an der Bodenwand des ECU-Gehäuses bereitgestelltes elastisches Halteelement (60) zur elastischen Stütze des Bodens der Verkleidung, **dadurch gekennzeichnet, dass**
das elastische Halteelement an dem Boden des ECU-Gehäuses an einem Ende befestigt ist und am anderen Ende lose ist, und dass das elastische Halteelement mit einem Vorsprung (61) ausgestattet ist, der von einer oberen Fläche des freien Endes des elastischen Elements hervorsteht, um die Verkleidung zu stützen.

2. Anlage nach Anspruch 1, worin das freie Ende des elastischen Halteelements (60) und der Vorsprung (61) bogenförmig sind und **dadurch** den Boden der Verkleidung elastisch und stabil stützen.

3. Anlage nach Anspruch 1 oder 2, worin das elastische Halteelement (60) eine Struktur aufweist, in der sich seine Breite stufenweise zu dem freien Ende hin verkleinert, so dass das elastische Halteelement nicht mit den Befestigungsnuten (41, 42) in Berührung kommt.

## Revendications

1. Système de freinage à commande électronique, comprenant un boîtier (11) d'une unité de commande électrique (UCE), et une pluralité d'électrovannes (20) comprenant chacune un ensemble de vanne (21) comprenant un manchon (21a) et une armature (21c) reçue de façon coulissante dans le manchon, un ensemble de spire (22) comprenant une bobine (22b) pour recevoir axialement le manchon de l'ensemble de vanne et une spire (22a) enroulée autour de la bobine, une enceinte (22c, 22d) pour recevoir la bobine, l'enceinte étant axialement espacée du sommet de la bobine pour définir un espace prédéterminé, des conducteurs (23) fixés à la bobine de façon insérée pour établir une connexion électrique avec une carte de circuit imprimé (12) agencée dans le boîtier de l'UCE, et un dispositif de fixation pour fixer l'ensemble de spire au boîtier de l'UCE, les ensembles de spire des électrovannes étant agencés dans le boîtier de l'UCE en étant uniformément espacés les uns des autres, le dispositif de fixation comprenant:
des bosses de fixation (51, 52) saillant axialement à partir du fond de la bobine pour s'étendre axialement à travers l'enceinte;
des rainures de fixation (41, 42) formées sur la paroi inférieure du boîtier de l'UCE pour recevoir et fixer les extrémités saillantes des bosses de fixation; et
un élément de support élastique (60) disposé sur la paroi inférieure du boîtier de l'UCE pour supporter de façon élastique le fond de l'enceinte; **caractérisé en ce que**:
l'élément de support élastique est fixé à la paroi inférieure du boîtier de l'UCE à une extrémité, et est libre à l'autre extrémité; et **en ce que** l'élément de support élastique comporte une saillie (61) saillant à partir d'une surface supérieure de l'extrémité libre de l'élément élastique pour supporter l'enceinte.

2. Système selon la revendication 1, dans lequel l'extrémité libre de l'élément de support élastique (60) et la saillie (61) ont une forme courbe qui leur permet de supporter le fond de l'enceinte d'une façon élastique et stable.

3. Système selon la revendication 1 ou la revendication 2, dans lequel l'élément de support élastique (60) présente une structure dont la largeur diminue progressivement en direction de son extrémité libre, de telle sorte que l'élément de support élastique n'interfère pas avec les rainures de fixation (41, 42).
